# EUROPEAN PATENT APPLICATION

(11) **EP 3 457 675 A1**
(43) Date of publication of application: **20.03.2019**
(21) Application number: 18194109.7
(22) Date of filing: 12.09.2018
(51) Int. Cl.: H04M 3/51, H04M 7/00, G06Q 10/10, H04M 3/523

(54) **DYNAMIC COMPUTING ENVIRONMENT ALLOCATION FOR CONTACT CENTER INTERACTION**

(30) Priority: 13.09.2017 US 201715703830
(71) Applicant: Teleperformance SE, 75008 Paris (FR)
(72) Inventor: HARDY, Lyle, Holladay, Utah 84117 (US); DAVIS, Evan, Santaquin, Utah 84655 (US); FELLING, Forest Mitchell, Holladay, Utah 84117 (US)
(74) Representative: Dilg, Haeusler, Schindelmann Patentanwaltsgesellschaft mbH

(57) **Abstract**

Computer implemented method for dynamically delivering user-customized instances of computing environments to contact center agents. User input collected using automated interaction techniques, and related to a software or operating system for which the customer needs support, is received in a contact center. The collected information is used to select or determine instances of computing environments that best approximate to emulate the particular environment for which support is being requested. Once identified, an instance of the computing environment is sent to a workstation of an available agent and a direct communication session is brokered between the agent and the requesting user. Dynamically generating the instance as a virtual machine from a server in the contact center or otherwise communicatively coupled to the workstation of the agent or distributing pre-generated instances of a virtual machine.

## Description

### BACKGROUND

Many businesses and organizations offer services to consumers and other clientele remotely. While a growing portion of these services are becoming automated, human interaction is often preferred (and sometimes necessary) for more difficult or complex cases. Naturally, many businesses and organizations employ human representatives to provide (technical) support and/or information to inquiring consumers and other interested parties regarding products and/or services. To handle large volumes of requests, a popular approach used by many organizations is to use one or more contact centers staffed by human agents. Many individualized contact centers are centralized to provide sufficient space and resources for many agents working simultaneously. For example, a larger contact center may support hundreds or thousands of workstations in a single building or campus of buildings. In that manner, maintenance and installation of all of the infrastructure (e.g., computers, workstation cubicle, etc.) would be centralized.

These contact centers typically handle large volumes of service or fulfillment requests by telephone (or communication technologies that simulate a telephonic communication). Typically, agents will answer calls in the order they are received, and when the number of available agents is surpassed by the number of pending calls, a chronological queue is formed that agents may respond to whenever available (e.g., a previous call is completed).

A popular example of a contact center is an inbound contact center that manages incoming calls to provide services to incoming callers. For example, an inbound contact center may provide support to complete a sale, handle issues or questions regarding products (e.g., installation instructions, warranty service, etc.), handle calls related to services (e.g., banking, collections, police, fire, alarm, etc.), and other similar types of services. Another example of a contact center is an outbound contact center that initiates calls. An outbound contact center may provide telemarketing for a product or service, enable the solicitation of charitable or political donations, provide debt collection services, perform polling or market research, etc.

Each individual support session or case depends on a variety of factors. These factors can include, for example, the caller or customer's own expertise or knowledge, the agent's skill and experience, the complexity of a particular product or service, the policies involved in addressing the product or service, and even the strength or quality of the connection. As a result, a support session can have an extremely variable duration. This uncertainty can make it difficult to predict the number of agents required to staff a contact center to adequately provide service to callers while simultaneously minimizing overstaffing (and thus inefficient resource allocation) and caller wait-times.

Several approaches have been introduced to address these issues. One common approach is to use different tiers of agents. This approach is popular for technical support and troubleshooting cases, particularly for software products. In essence, issues are ranked according to complexity. Callers or customers can indicate or describe the issue to an attendant (which can be the first tier of agents), the agent can prescribe some initial ameliorative actions, or if the issue is common, well-known, or simple enough, can provide a specific set of instructions for the caller to perform. However, if the attendant is unaware of a solution, unable to provide a solution, or if the initial ameliorative action is insufficient, the attendant can "escalate" the case to the next tier of agents, which typically have a higher level of training, experience, and/or expertise.

Another approach is to use automated interactive systems. These systems can replace a human attendant with an automated service that collects user input corresponding to directed prompts. Common for call-centers, the caller or customer can use touch-tone phones to indicate selections when provided a list of options. Often, these options are presented to the caller in successive stages that further define the issue or product of interest to the caller.

However, while collecting information from the user can expedite the support-handling process, agents may be limited to supporting users with the same computing resources available to the agents at their workstations. To adequately serve all sectors of an organization's products or services then requires agents with workstations that have every possible combination of the specific products, services, and *versions* available. Naturally, for an organization with a broad range of products and services or a long history of products and services to support, properly provisioning and staffing for every possible combination can be prohibitively costly.

### SUMMARY

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter.

According to embodiments of the present invention, various computer implemented methods are provided for dynamically delivering user-customized instances of computing environments to contact center agents. User input collected using automated interaction techniques is received in a contact center. The collected information is used to select or determine instances of computing environments that best approximate the particular environment for which support is being requested. Once identified, an instance of the computing environment is sent to a workstation of an available agent and a direct communication session is brokered between the agent and the requesting user. According to various embodiments, the method may include dynamically generating the instance as a virtual machine from a server in the contact center or otherwise communicatively coupled to the workstation of the agent. Alternately, the method may include distributing pre-generated instances of a virtual machine.

According to another embodiment, a method for receiving support requests for a call center is provided. According to one embodiment, a communication (e.g., a call) session is initiated at a call center between a customer or user of a product or service having technical support or services being provided by the a center. User input is collected using an interactive voice response (IVR) system using a series of directed queries that prompt user input to select (using a touch-tone phone or touch screen, for example) from options that characterize or describe the particular product or service (e.g., software or operating system) the user is seeking support for. A corresponding computing platform or environment is identified from the collected information, and a virtual instance is either dynamically generated (if necessary) or a pre-generated instance is distributed (if available) to the workstation of the next available agent.

According to another embodiment, a method for receiving support requests for a contact center is provided. According to one embodiment, a communication (e.g., a call) session is initiated at a contact center between a customer or user of a product or service having technical support or services being provided by the a center. User input is collected using an automated web-based user interface system that presents (graphically and/or verbally) a series of directed queries that prompt user input to select (using a user input device, virtual input device, augmented reality input device, or touch screen, for example) from options that characterize or describe the particular product or service (e.g., software or operating system) the user is seeking support for. A corresponding computing platform or environment is identified from the collected information, and a virtual instance is either dynamically generated (if necessary) or a pre-generated instance is distributed (if available) to the workstation of the next available agent.

### BRIEF DESCRIPTION OF THE DRAWINGS

The accompanying drawings, which are incorporated in and form a part of this specification and in which like numerals depict like elements, illustrate embodiments of the present disclosure and, together with the description, serve to explain the principles of the disclosure.
FIG. 1 depicts a block diagram of an exemplary computer system suitable for implementing embodiments according to the present disclosure.
FIG. 2 is an illustration of a system configured for dynamically distributing instances of a computing environment customized for a remote user to a workstation of an agent within a contact center, in accordance with one embodiment of the present disclosure.
FIG. 3 is a flow diagram illustrating a method for dynamically distributing instances of a computing environment customized for a remote user to a workstation of an agent within a contact center, in accordance with one embodiment of the present disclosure.
FIG. 4 is a flow diagram illustrating a method for determining an available agent to dynamically distribute an instance of a computing environment customized for a remote user for performing support services, in accordance with one embodiment of the present disclosure.
FIG. 5 is a flow diagram illustrating a method for determining an appropriate instance of a computing environment based on automatically collected user input, in accordance with one embodiment of the present disclosure.

### DETAILED DESCRIPTION

Reference will now be made in detail to several embodiments. Furthermore, in the following detailed description, numerous specific details are set forth in order to provide a thorough understanding of the claimed subject matter. However, it will be recognized by one skilled in the art that embodiments may be practiced without these specific details or with equivalents thereof. In other instances, well-known processes, procedures, components, and circuits have not been described in detail as not to unnecessarily obscure aspects and features of the subject matter.

Portions of the detailed description that follow are presented and discussed in terms of a process. Although operations and sequencing thereof are disclosed in a figure herein describing the operations of this process, such operations and sequencing are exemplary. Embodiments are well suited to performing various other operations or variations of the operations recited in the flowchart of the figure herein, and in a sequence other than that depicted and described herein.

Some portions of the detailed description are presented in terms of procedures, operations, logic blocks, processing, and other symbolic representations of operations on data bits that can be performed on computer memory. These descriptions and representations are the means used by those skilled in the data processing arts to most effectively convey the substance of their work to others skilled in the art. A procedure, computer-executed operation, logic block, process, etc., is here, and generally, conceived to be a self-consistent sequence of operations or instructions leading to a desired result. The operations are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout, discussions utilizing terms such as "accessing," "writing," "including," "storing," "transmitting," "traversing," "associating," "identifying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments described herein may be discussed in the general context of computer-executable instructions residing on some form of computer-readable storage medium, such as program modules, executed by one or more computers or other devices. By way of example, and not limitation, computer-readable storage media may comprise non-transitory computer storage media and communication media. Generally, program modules include routines, programs, objects, components, data structures, etc., that perform particular tasks or implement particular abstract data types. The functionality of the program modules may be combined or distributed as desired in various embodiments.

Computer storage media includes volatile and nonvolatile, removable and non-removable media implemented in any method or technology for storage of information such as computer-readable instructions, data structures, program modules or other data. Computer storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information and that can accessed to retrieve that information.

Communication media can embody computer-executable instructions, data structures, and program modules, and includes any information delivery media. By way of example, and not limitation, communication media includes wired media such as a wired network or direct-wired connection, and wireless media such as acoustic, radio frequency (RF), infrared and other wireless media. Combinations of any of the above can also be included within the scope of computer-readable media.

Embodiments of the present invention are described within the context of a contact center, e.g., a contact center used to facilitate interactions and/or communications between agents and customers through a telephone network, such as handling incoming and outgoing calls. In one or more embodiments, a contact center is employed to provide services to customers on behalf of a third party client through various systems and methods of interacting and/or communicating with the client. A typical configuration of a contact center includes, for example, a centralized location remotely located from a substantial portion --if not vast majority-- of the customers or clients that contribute to the call volume. For example, for contact centers operating under the purview of a software vendor, rather than using employees, the institution may be a client of a third party provider that operates the contact center, and contracts with the contact center to provide technical support or product inquiry services to its customers. In such an example, at least a portion of the services conducted over telephone or other long distance communication channels are provided by the agents of the contact center via direct interaction with the customers.

According to one or more embodiments, a contact center is able to support interaction and/or communication between an agent and a customer along one or more communication channels. One type of interaction involves telephone communications between an agent and a customer through a phone network (e.g., mobile, public switched network, combinations of mobile and public switched network, etc.). Other types of interactions and/or communications between an agent and a customer also include, but are not limited to: video conferencing, text, text messaging, internet based communications through graphical user interfaces on one or more web pages, etc.

Contact centers employ agents to provide technical support and product inquiry support to customers, customers of clients, or potential customers. For example, a client that is a software vendor may offer support for various software products and even particular versions of software products in the market to customers and potential customers, while another client (hardware device vendor) may provide support for multiple lines of products, down to the specific models, and even software-hardware combination. Because each particular service or product can be substantially different from others offered by the same vendor, an agent may not be able to replicate (e.g., troubleshoot) or solve certain version or model specific technical issues without having the same or substantially similar product or product environment used by the caller/customer. Likewise, when responding to product inquiries, an agent may require specifically detailed information to accurately answer any questions a customer or potential customer may have.

To address these issues, embodiments of the present invention provide techniques for dynamically distributing instances of multiple computing environments to an agent that is customized to approximate the environment for which support is being requested by a customer. Other embodiments of the present invention provide the ability to dynamically generate and distribute new instances of computing environments specifically provisioned to mimic the known environments used by the requesting customer. According to one or more embodiments, an automated intake session is performed before the agent is connected to the customer. During the automated intake session, the caller or customer is presented a series of directed queries designed to identify, characterize, or specify the computing environment of the user, or a computing environment of interest to the user. The customer is able to select from a list of options to provide the requested information, and the information is collected, and analyzed, and a computing environment that best matches the information collected is dynamically distributed to an available agent's workstation.

While the following example configurations are shown as incorporating specific, enumerated features and elements, it is understood that such depiction is exemplary. Accordingly, embodiments are well suited to applications involving different, additional, or fewer elements, features, or arrangements.

### EXEMPLARY COMPUTER SYSTEM

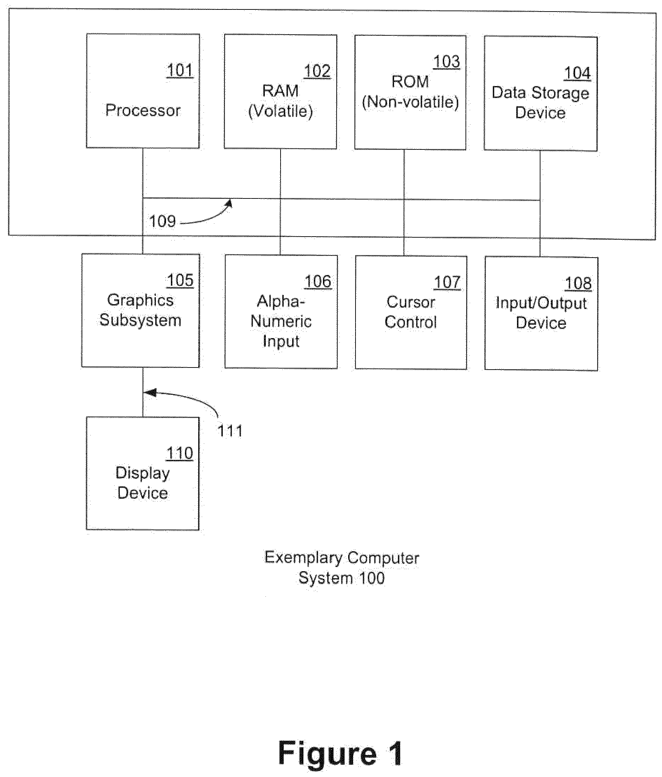

FIG. 1 is a block diagram of an example of a computing system 100 capable of implementing embodiments of the present disclosure. Computing system 100 broadly represents any single or multi-processor computing device or system capable of executing computer-readable instructions. Examples of computing system 100 include, without limitation, workstations, laptops, client-side terminals, servers, distributed computing systems, handheld devices, or any other computing system or device. In its most basic configuration, computing system 100 typically includes at least one processing unit 101 and memory, and an address/data bus 109 (or other interface) for communicating information. Depending on the exact configuration and type of computing system environment, system memory generally represents any type or form of volatile or non-volatile storage device or medium capable of storing data and/or other computer-readable instructions. Examples of system memory include, without limitation, volatile (such as RAM 102), non-volatile (such as ROM 103, flash memory, etc.), or any other suitable memory device. In one or more embodiments, The memory can include a frame buffer for storing pixel data drives a display device 110.

The computer system 100 may also comprise an optional graphics subsystem 105 for presenting information to a user, e.g., by displaying information on an attached display device 110, connected by a video cable 111. According to embodiments of the present claimed invention, the graphics subsystem 105 may be coupled directly to the display device 110 through the video cable 111. In alternate embodiments, display device 110 may be integrated into the computing system (e.g., a laptop or netbook display panel) and will not require a video cable 111.

Additionally, computing system 100 may also have additional features/functionality. For example, computing system 100 may also include additional storage (removable and/or non-removable) including, but not limited to, magnetic or optical disks or tape. Computer storage media includes volatile and nonvolatile, removable and non-removable media implemented in any method or technology for storage of information such as computer readable instructions, data structures, program modules or other data. RAM 102, ROM 103, and external data storage device (not shown) are all examples of computer storage media.

Computer system 100 also comprises an optional alphanumeric input device 106, an optional cursor control or directing device 107, and one or more signal communication interfaces (input/output devices, e.g., a network interface card) 108. Optional alphanumeric input device 106 can communicate information and command selections to central processor 101. Optional cursor control or directing device 107 is coupled to bus 109 for communicating user input information and command selections to central processor 101. Signal communication interface (input/output device) 108, also coupled to bus 109, can be a serial port. Communication interface 108 may also include wireless communication mechanisms. Using communication interface 108, computer system 100 can be communicatively coupled to other computer systems over a communication network such as the Internet or an intranet (e.g., a local area network).

In some embodiments, a computer-readable medium containing a computer program may be loaded into computing system 100. All or a portion of the computer program stored on the computer-readable medium may then be stored in system memory and/or various portions of storage devices. When executed by processing units 101 and/or 105, a computer program loaded into computing system 100 may cause processor 101 and/or 105 to perform and/or be a means for performing the functions of the example embodiments described and/or illustrated herein. Additionally or alternatively, the example embodiments described and/or illustrated herein may be implemented in firmware and/or hardware.

### EXEMPLARY CONTACT CENTER

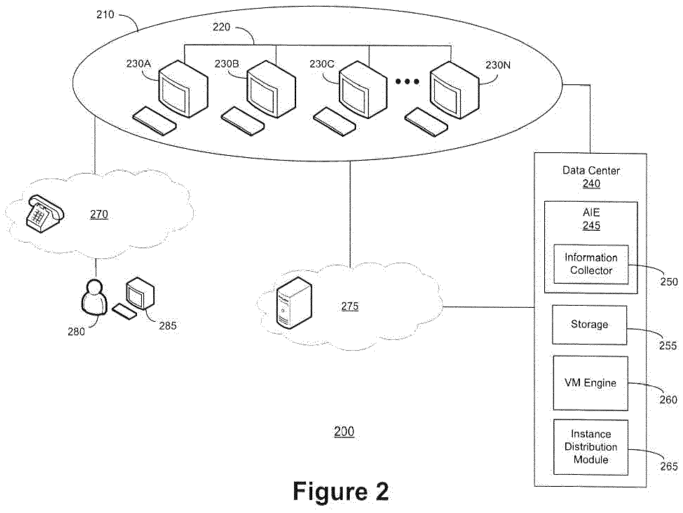

FIG. 2 is an illustration of a system 200 for dynamically distributing computing environments based on collected user input performed between an automated system and a customer (caller) to assist in technical support or product inquiry support performed by an agent within a contact center, in accordance with embodiments of the present disclosure. One or more components of system 200 may be implemented by, for example, the computing system 100 of FIG. 1 for the purposes of distributing user-customized computing environments to an agent providing support for computing environment products or services, in accordance with one embodiment of the present disclosure.

According to one or more embodiments, system 200 includes a contact center 210 operated by one or more agents of a business or organization to handle interactions with customers of the business or organization. In alternate embodiments, the contact center may operate on behalf of a client business or organization and managed by a third party service purveyor. According to such embodiments, agents may be trained and tasked with providing support and information to one or more customers 280 regarding products and/or services associated with a client business or organization. Tasks that agents of contact center 210 may perform include (but are not limited to): responding to requests for support and information, helping a customer complete a sale of a product or service, assisting a customer with accessing information managed by the client, or cooperatively guiding the customer to handle issues and problems with products or services provided or offered by the client.

Customers 280 may interact with agents at workstations 230 through one or more communication networks 270 and 275. For example, communication network 275 may include a system of interconnected computer networks (e.g., Internet) that allow for direct communication between a customer and a client. Also, communication network 270 may be any combination of phone networks that are configured to connect a customer to an agent at a particular workstation, such as a mobile phone network, a land-line based public switched telephone network (PSTN), etc.

According to one or more embodiments, the contact center 210 may include a network 220 of workstations 230, including workstations 230A-N, each workstation being attended to by one or more agents. In one or more embodiments, a workstation can be compartmentalized as a scalable unit, and is configured to provide essential resources that an agent utilizes to handle requests by a customer on behalf of a client. For example, a workstation may integrate a computing system (not shown), and telephone component (not shown) on an individual working platform. By providing an infrastructure that includes substantial workstation and human (agent) resources, a contact center 210 is able to efficiently install and maintain large call volumes. In addition, by providing a centralized location for workstations, agents have ready access to information, resources, and supervisors to help achieve and maintain the highest quality of service to the customers of the client.

As depicted in Figure 2, each workstation computing system is configured to dynamically access one or more computing environments over a communication network 275. For example, the workstation computing system may dynamically access (receive) and execute an instance of a client-operated application that matches the instance executing on the computing system of a customer 280 requesting support or information from the contact center 210. The workstation computing system may also be configured with one or more software applications operable to create and maintain a communication channel between a customer and an agent at the workstation. For example, the communication channel may include internet based voice communications, navigation of a shared website accessed simultaneously and in conjunction by the customer and the agent, text based communication, etc. In one or more embodiments, the telephone component of a workstation is configured to provide communication (e.g., voice) between a customer and an agent attending to the workstation. For example, the telephone component may be coupled to a corresponding phone of the customer via communication network 270 and/or network 275.

As presented in Figure 2, a Data Center 240 affiliated with the contact center 210 includes one or more computing systems communicatively coupled to the plurality of workstations 230 of contact center 210. In one or more embodiments, the data center 240 may be locally disposed at the contact center and (relatively) proximate to the network 220 of workstations. In alternate embodiments, the data center 240 is communicatively coupled to the contact center 210 --via communication network 275, for example-- but is located remotely with respect to that contact center 210. Data Center 240 may be located instead either at another affiliated contact center for example, or as part of a larger (e.g., cloud) data center comprised of one or more affiliated and unaffiliated data centers.

According to one or more embodiments, the Data Center 240 may be implemented as one or more computing devices (e.g., servers), such as the system 100 described above with respect to Figure 1, that include one or more processing units, one or more storage and memory devices, and one or more display devices. The one or more processing units may execute programmed instructions stored in the one or more memory devices to implement an automated intake engine (AIE) 250 is configured to collect information from a contacting customer that characterize the products or services the contacting customer is requesting support or assistance with. For instance, an information collector module 255 of the AIE 250 may implement an automated system that is configured to perform an automated information intake session over the course of an initial exchange with the contacting customer. The intake session may present one or more directed questions to the user and solicit a response -- such as a user selection of one or more choices from a list of options.

The information collected by the AIE 250 may be stored in a storage on the Data Center 240 for later access, such as when performing analysis on the information. For example, a virtual machine (VM) engine 265 can access the stored information, analyze the collected information, and, based on the analysis, determine an appropriate computing environment. According to one or more embodiments, the computing environment may be an instance of a virtual machine pre-loaded with an operating system and/or software application that matches the information collected by the AIE 250 during an initial interaction with the contacting customer 280. For example, if the automated intake engine 245 determines (via analysis of collected user-input) that the contacting customer 280 is requesting support or assistance for an operating system product managed by the contact center 210, the VM Engine 265 may compare the identified operating system with the default operating system of an available agent's workstation. If the operating system at the agent's workstation is not the same operating system as the one used by the contacting customer 280 (as determined by the AIE 25), an instance of the appropriate operating system is distributed to and loaded at the agent's workstation. When the contacting customer 280 is requesting support or assistance for a software application, or software-operating system combination, the VM Engine 260 may identify the respective combination and distribute a virtual machine pre-loaded with instances of the operating system and software applications to the workstation of the next available agent.

According to alternate embodiments, the computing environment, which may consist of an operating system or operating system and software application(s), can be received as an instance of a virtual machine and loaded by, for example, a hypervisor executing in the workstation of the agent. In alternate embodiments, the operating system may be executed in the workstation using an emulator of the operating system, and the software application(s) may be installed via the emulated operating system. In still further embodiments, one or more workstations (any of 230A-230N) of agents at the contact center 210 may be provisioned as thin clients. According to these embodiments, virtual machine instances of the requested computing environment (operating system and/or operating system and software application(s)) are provisioned and executed by the VM Engine 260 in the Data Center 240, and managed by a hypervisor of the Data Center 240. For these embodiments, at least a substantial portion of the processing and computing is performed by the Data Center 240, and accessible to the agent via a graphical user interface implemented by the thin client workstation.

In one or more embodiments, the determination of the next available agent and the subsequent default computing environment at the workstation of the next available agent, and the distribution of the instances generated by the VM Engine 260 may be performed by an Instance Distribution Module 265. The Instance Distribution Module 265 may determine the next available agent by continuously or periodically querying the session, telephony, or computer-telephony status of each workstation for each agent logged in to the contact center distributed system (e.g., contact center application). If no agents are available, the contacting customer 280 may be placed on hold. According to one or more embodiments, the VM Engine 260 may pre-generate instances of virtual machines with the operating systems, or integrated software-operating system environments supported by the contact center 210 and distribute the instances (e.g., via Instance Distribution Module 265) as necessary. In alternate or further embodiments, the VM Engine 260 may dynamically generate the instances of virtual machine on-demand, customized for the contacting customer 280 based on the information collected by the AIE 250.

### DYNAMIC DISTRIBUTION OF COMPUTING ENVIRONMENTS

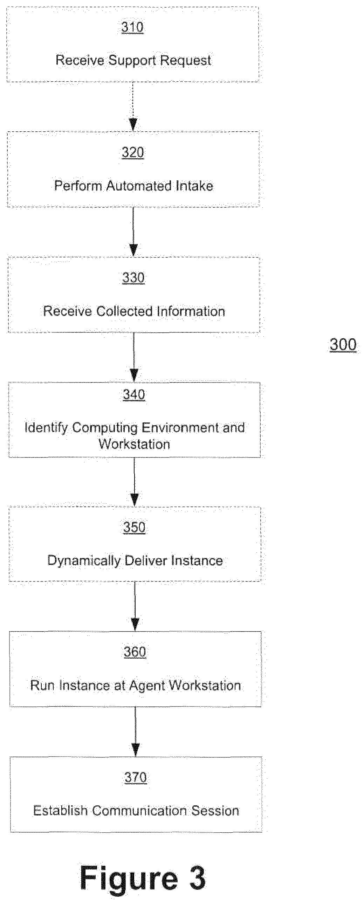

FIG. 3 is a flow diagram 300 illustrating a computer-implemented method for dynamically selecting and distributing computing environments to contact center agents, in accordance with one or more embodiments of the present disclosure. Steps 310-370 describe exemplary steps comprising the process 300 depicted in Figure 3 in accordance with the various embodiments herein described. In one embodiment, the process 300 is implemented at least in part as computer-executable instructions stored in a computer-readable medium and executed in a computing device. According to various embodiments, the method outlined in flow diagram 300 may be implemented and/or executed by one or more components of the systems 100 and 200, of FIGS. 1-2, respectively.

At 310, the method begins by receiving a communication request. The communication request may comprise, for example, an inbound call initiated by a customer and received at a workstation assigned to an agent, and may be received via a telephone device through a voice network (e.g., network 270 of Fig. 2), and/or as an Internet-based communication via a network interface to the Internet (e.g., network 275 of Fig. 2). Alternately, the communication request may also begin as an outbound call, initiated either by the agent (e.g., by dialing a phone number), or an automated system that performs the dialing (or other addressing) and facilitates a connection between the agent and the customer. According to one or more embodiments, the communication session (either inbound or outbound if initiated automatically by the system) may be received in a shared pool or queue of calls, accessible to any one of a number of agents at a corresponding number of workstations.

Upon receiving the communication request at step 310, an intake session is performed at step 320. In one or more embodiments, the intake session is performed by an automated intake engine (AIE) (e.g., AIE 250 in Figure 2) that is configured to collect information from the contacting customer corresponding to the communication request received at step 310. Information collected is used to characterize the products or services the contacting customer is requesting support or assistance with. For instance, the intake session may present one or more directed questions to the user and solicit a response -- such as a user selection of one or more choices from one or more pre-selected lists of options.

The questions may be presented according to a dynamically adjustable question tree, whereby subsequent questions that are presented to the contacting customer depend on the user's selections from previous questions. For example, if a customer is contacting a contact center to request support for a software application managed by the contact center, the customer may be first prompted to select from a list or menu of products supported by the contact center. If the customer identifies the software application in question, the automated system processes the customer's initial response, selects the next question to present (e.g., branch of a question tree) based on the previous response, and the next question presented to the customer may be to request the user to specify the version or year of the software application from all known versions corresponding to that particular software application in the system. The next question after that may be to request the user to select from one or more issues for the specific version of the software application that are known to the contact center. By using directed questions and sequentially filtering subsequent questions based on previously submitted user-input, characteristics of the contacting customer's computing environment can be ascertained.

In one or more embodiments, steps 310 and 320 may be performed by one or more processing components remotely positioned with respect to the contact center. For example, steps 310 and 320 may be performed in whole or in part at a data center that stores and manages data for the contact center that is communicatively coupled to the workstations of the contact center. Alternately, steps 310 and 320 may be performed by computing systems and devices within the contact center. At step 330, the information collected during the automated intake session at step 320 is received. The information may be received in, for example, a data analyzer or an Instance Distribution Module comprised in the data center. The information is processed at step 340 to determine the product or service managed by the contact center and the computing environment of the contacting customer in which the product or service is executing. For example, if the product or service comprises a version of a software application, information regarding the computing environment --including, for example, an operating system, extensions, other software applications -- that the product or service depends on or is integrated with can also be collected and identified at step 340.

Once identified, a virtual machine instance pre-loaded with the computing environment matching the computing environment identified at step 340 is dynamically selected and delivered to the workstation of the next available agent at step 350. The virtual machine instance may be one of a pre-generated set of virtual machine instances pre-loaded with software products or services managed by the contact center, and dynamically selected to be customized for the contacting customer's computing environment. According to further embodiments, the pre-generated set of virtual machine instances may include multiple virtual machine instances with varying combinations of versions of operating systems and/or software applications. Alternatively, the virtual machine instance may be dynamically generated and specifically provisioned with the version or model of the operating system and/or software applications of the contacting customer.

At step 360, the instance of the virtual machine dynamically delivered at step 350 is executed in the workstation of the selected agent. In one or more embodiments, the virtual machine instance may be received via a network connection in, and managed by a hypervisor executing in the workstation of the selected agent. Alternately, the virtual machine instance of the computing environment may be deployed (either pre-generated or dynamically generated) at a server (which may be remotely positioned from the agent's workstation), and access to the virtual machine instance (e.g., as a remote desktop) can be granted to the workstation at steps 350-360. Access may be granted in embodiments or implementations where the workstation of the agent comprises a thin client, or a computing device with insufficient or reduced computing resources (processing or memory capabilities).

Finally, a communication session is established at step 370 between the agent and the contacting user. Establishing a communication session may be performed by, for example, creating a communication channel (e.g., phone call, web-connection) between the agent's telephone, voice over internet protocol (VOIP) device, or via a simultaneous connection to a website or webpage with communication (chat) interaction functionality. Once the communication channel is created, the agent is able to provide instructions or assistance to the contacting customer with enhanced precision. Since the agent is able to perform the same steps that are being described to the contacting customer in the same computing environment, the agent is able to see first hand the result of each action performed and will be able to empirically address or explain, in real-time, what the user is experiencing from the agent's instructions.

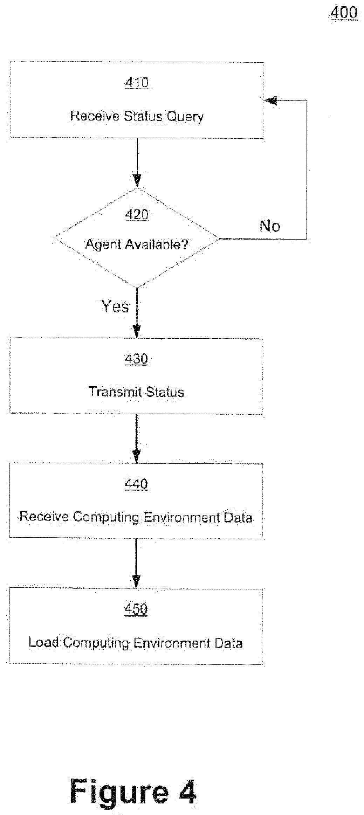

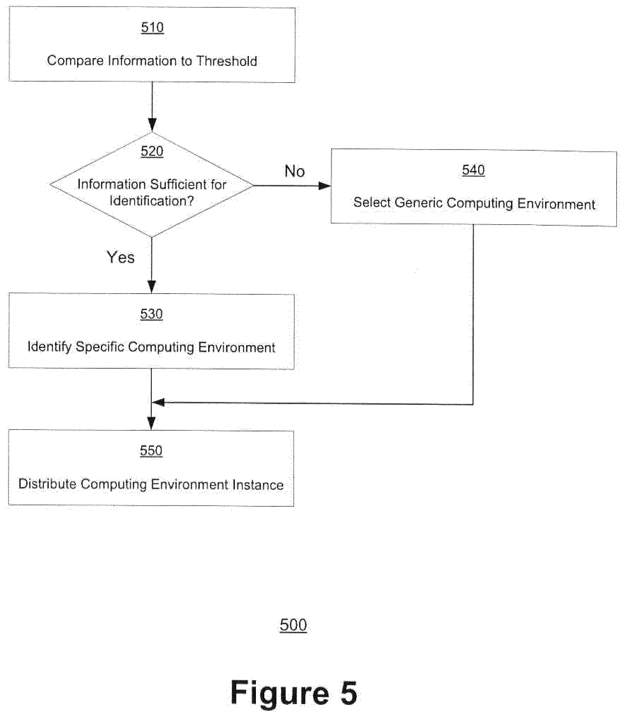

Figures 4 and 5 depict computer-implemented processes 400 and 500 performed by a workstation in a contact center, and/or a data center, to select an available agent to dynamically distribute computing environment data, and to determine whether information collected during an automated intake process sufficiently identifies the computing environment of a contacting customer, respectively. In one or more embodiments, process 400 and process 500 depict separate portions of the step 350 in the process 300 described above with respect to Figure 3 to identify a computing environment and agent/workstation to distribute the computing environment. Steps 410-450 describe exemplary steps comprising the process 400 depicted in Figure 4 in accordance with the various embodiments herein described. Steps 510-550 describe exemplary steps comprising the process 500 depicted in Figure 5, in accordance with the various embodiments herein described. In one embodiment, one or both of the processes 400 and 500 is implemented at least in part as computer-executable instructions stored in one or more computer-readable mediums and executed in one or more computing devices. According to various embodiments, the methods outlined in flow diagrams 400 and 500 may be implemented and/or executed by one or more components of the systems 100 and 200 of FIGS. 1-2, respectively.

The process 400 may be performed in response to receiving a status query in a workstation of an agent at step 410. In one or more embodiments, the status query may be sent from an application or program (e.g., the Instance Distribution Module 265 in Figure 2) executing in one or more computing devices in a data center or in the contact center. According to one or more embodiments, the status of an agent may be reflected in a data structure, which can be referenced at step 420 in response to the status query. According to these embodiments, the statuses of the agents in the contact center are continuously or periodically updated by tracking the telephony or computer telephony interface (CTI) state of the interface, workstation, or workstation component used to connect an agent with the customer.

The status of an agent may also be determined by monitoring the verbal communication (conversation) taking place between the agent and the customer during ongoing contact sessions, or tracking the activity of the agent on any applications executing on the workstation. In one or more embodiments, audio communication may be monitored using voice and video-teleconferencing communication protocols, such as the Real-time Transport Protocol (RTP), and/or Session Initiation protocol (SIP). The specific protocols used may themselves adhere to industry standards (e.g., the H.323 standard for call signaling and control). In one or more embodiments, the statuses of each agent once determined may be reported at step 430 in response to the query received at step 410. In alternate embodiments, the statuses of each agent may be reported when a change in status is determined for that particular agent.

In some instances, it may not be desirable for a particular agent to be assigned an incoming case (communication session). For example, in contact centers where cases may be organized in tiers, it may not be desirable to assign cases of a particular tier to agents who have not been certified or authorized to support cases at that tier. When no qualified agents are available, the status of all qualified agents may be monitored and a communication request may be assigned to the next available qualified agent. Where more than one qualified agent is available, an agent is selected from the available pool of qualified agents using one or more selection metrics (e.g., based on qualification, average speed in handling support requests, rating, experience, etc.) or algorithms (e.g., round robin).

If an available, qualified agent is selected to provide support for an incoming case, the workstation of the agent is notified, and data corresponding to the computing environment identified to match the computing environment of the contacting customer is received by the workstation at step 440, and executed (e.g., by a hypervisor executing in the workstation) at step 450. As described above, the data corresponding to the computing environment may include a virtual machine instance pre-loaded with one or more products or services managed by the contact center and any computing platforms (operating systems), critical software dependencies, or other integrated applications. In alternate embodiments, the data may comprise a direct channel (e.g., remote desktop) that provides access to the virtual machine instance executed by a hypervisor in a remote server.

The process 500 may be performed in response to receiving collected information at step 330 of process 300, depicted in Figure 3. The information may be collected, for example, by an automated intake session implemented by an automatic system in response to a communication request by a contacting customer. At step 510, the collected information is analyzed and compared to a threshold. For example, one or more questions presented to the user during the automated intake session may present an option to the contacting customer to skip the question if the contacting customer is unaware or uncertain of the answer. Questions directed to directly identifying the version or model of a software application, for example, may be difficult for certain contacting customers who are inexperienced, unskilled in the area, or unable to provide that information (e.g., due to system crash or freeze). If the number of questions that are not answered by the contacting customer exceeds a pre-determined threshold, or, for example, if the responses by a contacting customer fail a pre-determined compatibility check, it may not be possible to identify the computing environment of the contacting customer with sufficient certainty.

Whether the collected information exceeds the pre-determined threshold is determined at step 520 (e.g., as a binary output). If the threshold is exceeded, the specific computing environment is identified based on the collected information at step 530, and, once an available, qualified agent is determined (e.g., by performing process 400 described above with respect to Figure 4), an instance of the computing environment is distributed to the workstation of the selected agent. Otherwise, if the collected information is not sufficient to accurately or specifically identify the computing environment of the contacting customer, a basic generic computing environment is provisioned and distributed to the an available, qualified agent.

Embodiments of the present invention include the following Concepts:
Concept 1. A method for dynamically allocating a computing environment, the method including receiving, at a contact center including one or more workstations, information collected by an automated system, wherein the information characterizes a computing environment corresponding to a remote user; identifying a computing environment that substantially approximates the computing environment corresponding to the remote user based on the received information; dynamically delivering an instance of the identified computing environment to a workstation corresponding to an agent of the contact center; executing the delivered instance of the identified computing environment in the workstation corresponding to the agent; and establishing a communication session between the agent and the remote user.
Concept 2. The method according to Concept 1, wherein the information is collected by the automated system responsive to a contact-center request from the remote user, the contact-center request including at least one of: a request for support for a product or service affiliated with the contact center; and an inquiry regarding a product or service affiliated with the contact center.
Concept 3. The method according to Concept 1, wherein the computing environment includes at least one of: a software application installed or executing on a computing device operated by the user; and an operating system installed or executing on a computing device operated by the user.
Concept 4. The method according to Concept 3, wherein the information collected by the automated system characterizes at least one of: an identity of a software application installed or executing on a computing device operated by the user; a version of a software application installed or executing on a computing device operated by the user; an identity of an operating system installed or executing on a computing device operated by the user; and a version of an operating system installed or executing on a computing device operated by the user.
Concept 5. The method according to Concept 1, wherein the information is collected by the automated system by automatically presenting one or more directed queries to the user and collecting user input provided in response to the one or more directed queries.
Concept 6. The method according to Concept 1, wherein the automated system includes an interactive voice response (IVR) system.
Concept 7. The method according to Concept 6, wherein the information is collected by the IVR system via a telephone interaction with the remote user.
Concept 8. The method according to Concept 1, wherein the automated system includes an interactive web-based support request system.
Concept 9. The method according to Concept 1, wherein the instance of the identified computing environment includes an instance of a virtual machine including the identified computing environment.
Concept 10. The method according to Concept 1, wherein the workstation of the agent includes a thin client computing device.
Concept 11. The method according to Concept 1, wherein processing for the instance of the identified computing environment is substantially performed in a server communicatively coupled to the workstation corresponding to the agent.
Concept 12. The method according to Concept 11, wherein the instance of the identified computing environment includes an instance of a virtual machine implemented in the server and including the identified computing environment.
Concept 13. The method according to Concept 1, wherein the dynamically delivering the instance of the identified computing environment to a workstation of an agent of the contact center includes scanning an agent roster for available agents in the contact center; determining an available agent in the contact center; identifying the workstation corresponding to the available agent; and dynamically delivering the instance of the identified computing environment to a workstation corresponding to the available agent.
Concept 14. The method according to Concept 1, wherein the dynamically delivering the instance of the identified computing environment to a workstation of an agent includes delivering a pre-generated instance of a virtual machine including the identified computing environment to the workstation of the agent.
Concept 15. The method according to Concept 1, wherein the dynamically delivering the instance of the identified computing environment to a workstation of an agent includes dynamically generating an instance of a virtual machine including the identified computing environment in a server communicatively coupled to the workstation of the agent; and delivering the dynamically generated instance of the virtual machine including the identified computing environment to the workstation of the agent.
Concept 16. The method according to Concept 1, wherein the identifying a computing environment includes comparing the information collected by the automated system to a threshold level of characterization for a computing environment; determining whether the information collected by the automated system is sufficient to specifically identify a computing environment based on the comparison to the threshold level of characterization; identifying a computing environment with attributes that most closely approximates the information collected by the automated system when the information collected meets or exceeds the threshold level of characterization; and identifying a pre-configured generic computing environment with attributes that do not conflict with the information collected by the automated system when the information collected by the automated system does not meet or exceed the threshold level of characterization.
Concept 17. A method for receiving a dynamically distributed computing environment, the method including receiving, at a workstation computing device of a contact center, an availability status query; determining a current status of an agent corresponding to the workstation computing device; transmitting the current status of the agent; receiving computing environment data when the current status of the agent indicates a current availability of the agent; and loading the computing environment data in the workstation computing device, wherein the computing environment data is customized for a contacting user based on user input submitted through an automated intake system.
Concept 18. The method according to Concept 17, wherein the determining the current status of an agent corresponding to the workstation computing device includes querying at least one of: a telephony state of a telephonic device corresponding to the agent; a computer-telephony integration (CTI) state of the workstation computing device; and a support application interface state of the workstation computing device and corresponding to the contact center.
Concept 19. The method according to Concept 17, wherein the receiving computing environment data when the current status of the agent indicates a current availability of the agent includes receiving a pre-generated instance of a virtual machine including the customized computing environment to the workstation of the agent.
Concept 20. The method according to Concept 17, wherein the receiving computing environment data when the current status of the agent indicates a current availability of the agent includes receiving a dynamically-generated instance of a virtual machine including the customized computing environment to the workstation of the agent.
Concept 21. The method according to Concept 17, wherein the receiving computing environment data when the current status of the agent indicates a current availability of the agent includes receiving access to an instance of a virtual machine including the customized computing environment, the instance of the virtual machine being executed in a server communicatively coupled to the workstation of the agent.
Concept 22. A method for responding to a contact center request, the method including receiving, at a contact center, a support request for a product or service associated with the contact center, wherein the product or service corresponds to a computing environment; performing an automated intake session responsive to the support request, the automated information intake session including one or more directed queries for user input through an on-screen display of a graphical user interface to provide characteristics of the product or service; identifying a computing environment corresponding to the request based on information collected by the automated system; identifying an available agent in the contact center; and dynamically delivering access to an instance of the identified computing environment to a workstation of the available agent of the contact center.
Concept 23. The method according to Concept 22, the identifying an available agent in the contact center includes: determining qualified agents from a roster of agents; determining a current availability of qualified agents from the roster of agents; and identifying the workstation corresponding to an available agent. Concept 24. The method according to Concept 22, wherein the dynamically delivering access to an instance of the identified computing environment includes delivering access to a pre-generated instance of a virtual machine including the identified computing environment to the workstation of the agent.
Concept 25. The method according to Concept 22, wherein the dynamically delivering access to an instance of the identified computing environment includes dynamically generating an instance of a virtual machine including the identified computing environment in a server communicatively coupled to the workstation of the agent; and delivering access to the dynamically generated instance of the virtual machine including the identified computing environment to the workstation of the agent.
Concept 26. The method according to Concept 22, wherein the identifying a computing environment includes comparing the information collected by the automated system to a threshold level of characterization for a computing environment; determining whether the information collected by the automated system satisfies a threshold to specifically identify a computing environment based on the comparison to the threshold level of characterization; identifying a computing environment with attributes that most closely approximates the information collected by the automated system when the information collected meets or exceeds the threshold level of characterization; and identifying a pre-configured generic computing environment with attributes that do not conflict with the information collected by the automated system when the information collected by the automated system does not meet or exceed the threshold level of characterization.

Thus, according to embodiments of the present invention, methods and systems for dynamically distributing computing environments to workstations of a contact center based on user-input collected during an automated intake process are disclosed.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

Embodiments according to the invention are thus described. While the present disclosure has been described in particular embodiments, it should be appreciated that the invention should not be construed as limited by such embodiments.

## Claims

1. A method for dynamically allocating a computing environment, the method comprising:
receiving, at a contact center comprising one or more workstations, information collected by an automated system, wherein the information characterizes a computing environment corresponding to a remote user;
identifying a computing environment that substantially approximates the computing environment corresponding to the remote user based on the received information;
dynamically delivering an instance of the identified computing environment to a workstation corresponding to an agent of the contact center;
executing the delivered instance of the identified computing environment in the workstation corresponding to the agent; and
establishing a communication session between the agent and the remote user.

2. The method according to Claim 1, wherein the information is collected by the automated system responsive to a contact-center request from the remote user, the contact-center request comprising at least one of:
a request for support for a product or service affiliated with the contact center; and
an inquiry regarding a product or service affiliated with the contact center.

3. The method according to Claim 1, wherein the computing environment comprises at least one of:
a software application installed or executing on a computing device operated by the user; and
an operating system installed or executing on a computing device operated by the user.

4. The method according to Claim 3, wherein the information collected by the automated system characterizes at least one of:
an identity of a software application installed or executing on a computing device operated by the user;
a version of a software application installed or executing on a computing device operated by the user;
an identity of an operating system installed or executing on a computing device operated by the user; and
a version of an operating system installed or executing on a computing device operated by the user.

5. The method according to Claim 1, wherein the information is collected by the automated system by automatically presenting one or more directed queries to the user and collecting user input provided in response to the one or more directed queries.

6. The method according to Claim 1, wherein the automated system comprises an interactive voice response (IVR) system, and wherein the information is collected by the IVR system via a telephone interaction with the remote user.

7. The method according to Claim 1, wherein the automated system comprises an interactive web-based support request system.

8. The method according to Claim 1, wherein the instance of the identified computing environment comprises an instance of a virtual machine comprising the identified computing environment.

9. The method according to Claim 1, wherein the workstation of the agent comprises a thin client computing device.

10. The method according to Claim 1, wherein processing for the instance of the identified computing environment is substantially performed in a server communicatively coupled to the workstation corresponding to the agent.

11. The method according to Claim 10, wherein the instance of the identified computing environment comprises an instance of a virtual machine implemented in the server and comprising the identified computing environment.

12. The method according to Claim 1, wherein the dynamically delivering the instance of the identified computing environment to a workstation of an agent of the contact center comprises:
scanning an agent roster for available agents in the contact center;
determining an available agent in the contact center;
identifying the workstation corresponding to the available agent; and
dynamically delivering the instance of the identified computing environment to a workstation corresponding to the available agent.

13. The method according to Claim 1, wherein the dynamically delivering the instance of the identified computing environment to a workstation of an agent comprises delivering a pre-generated instance of a virtual machine comprising the identified computing environment to the workstation of the agent.

14. The method according to Claim 1, wherein the dynamically delivering the instance of the identified computing environment to a workstation of an agent comprises:
dynamically generating an instance of a virtual machine comprising the identified computing environment in a server communicatively coupled to the workstation of the agent; and
delivering the dynamically generated instance of the virtual machine comprising the identified computing environment to the workstation of the agent.

15. The method according to Claim 1, wherein the identifying a computing environment comprises:
comparing the information collected by the automated system to a threshold level of characterization for a computing environment;
determining whether the information collected by the automated system is sufficient to specifically identify a computing environment based on the comparison to the threshold level of characterization;
identifying a computing environment with attributes that most closely approximates the information collected by the automated system when the information collected meets or exceeds the threshold level of characterization; and
identifying a pre-configured generic computing environment with attributes that do not conflict with the information collected by the automated system when the information collected by the automated system does not meet or exceed the threshold level of characterization.
